(19) Europäisches Patentamt
European Patent Office
Office européen des brevets

(11) EP 0 902 771 B1

## (12) EUROPÄISCHE PATENTSCHRIFT

(45) Veröffentlichungstag und Bekanntmachung des Hinweises auf die Patenterteilung:
**06.06.2001 Patentblatt 2001/23**

(51) Int Cl.$^7$: **C04B 35/117**, C04B 35/65, C22C 29/12, C22C 32/00, C22C 1/10, A61L 27/00, F16D 69/02

(21) Anmeldenummer: **97923068.7**

(22) Anmeldetag: **13.05.1997**

(86) Internationale Anmeldenummer: **PCT/EP97/02445**

(87) Internationale Veröffentlichungsnummer: **WO 97/43228 (20.11.1997 Gazette 1997/50)**

(54) **METALL-KERAMIK-FORMKÖRPER UND VERFAHREN ZU IHRER HERSTELLUNG**

METAL-CERAMIC SHAPED BODY AND PROCESS FOR MANUFACTURING THE SAME

CORPS MOULE EN CERMET ET SON PROCEDE DE FABRICATION

(84) Benannte Vertragsstaaten:
**DE GB**

(30) Priorität: **14.05.1996 DE 19619500**

(43) Veröffentlichungstag der Anmeldung:
**24.03.1999 Patentblatt 1999/12**

(73) Patentinhaber: **CLAUSSEN, Nils**
**D-21224 Rosengarten (DE)**

(72) Erfinder:
• **CLAUSSEN, Nils**
**D-21224 Rosengarten (DE)**
• **SCHICKER, Silvia**
**D-20357 Hamburg (DE)**
• **GARCIA, Daniel**
**D-21075 Hamburg (DE)**

• **JANSSEN, Rolf**
**D-21075 Hamburg (DE)**

(74) Vertreter: **Huber, Bernhard, Dipl.-Chem.**
**Weickmann & Weickmann**
**Patentanwälte**
**Postfach 86 08 20**
**81635 München (DE)**

(56) Entgegenhaltungen:
DE-A- 4 447 130          DE-B- 1 056 037

• DATABASE WPI Section Ch, Week 8638 Derwent Publications Ltd., London, GB; Class D21, AN 86-248608 XP002039363 & JP 61 176 354 A (KYOCERA CORP) , 8.August 1986

**Beschreibung**

Die Erfindung betrifft einen Keramik-Metall-Verbundwerkstoff mit einer Matrix aus $Al_2O_3$, seine Herstellung und Verwendung.

Keramische Werkstoffe sind aufgrund ihrer hervorragenden Hochtemperaturstabilität, ihrer Verschleißfestigkeit und Härte sowie ihrer exzellenten Oxidations- und Korrosionseigenschaften eine vielversprechende Werkstoffgruppe. Ein wesentlicher Nachteil ist jedoch ihre Sprödigkeit, die insbesondere ihre Anwendung als Konstruktionswerkstoff limitiert. Daher ist Verbesserung der Bruchzähigkeit keramischer Werkstoffe seit vielen Jahren Gegenstand intensiver Forschungsaktivitäten.

Ein Versuch zur Lösung dieses Problems beinhaltet beispielsweise den Einbau umwandlungsfähiger $ZrO_2$-Teilchen ("Strengthening Strategies für $ZrO_2$-Toughened Ceramics at High Temperatures", J.Mater. Sci.Eng.,71 (1985) 23) oder SiC-Whisker ("TZP Reinforced with SiC Whiskers", J.Am.Ceram.Soc., 69, (1986) 288) in eine $Al_2O_3$-Matrix.

Als besonders aussichtsreich für die Erhöhung der Schadenstoleranz keramischer Werkstoffe galt in den sechziger Jahren die Entwicklung der Cermets, zweiphasiger Verbundwerkstoffe, bestehend aus einer keramischen Matrix und einer duktilen metallischen Einlagerungsphase ("Aufbau und Eigenschaften von Cermets", Z.Metallkde., 59 (1968) 170). Die Hoffnung, in den Cermets die positiven Eigenschaften beider Materialklassen vereinen zu können, blieb jedoch in fast allen Fällen unerfüllt. Eine drucklose Sinterung ist in den meisten Fällen aufgrund des schlechten Benetzungsverhaltens flüssiger Metalle auf Oxidkeramiken nicht möglich, da die flüssige Metallphase während der Temperaturbehandlung aus dem Formkörper herausschwitzt. Auch eine Verbesserung des Benetzungsverhaltens durch Legierungszusätze oder Beschichtungen ("Fabrication of Cermets from Alumina and Ni-Based Alloys", Ceram. Trans., Ceramic Science III, (Ed. G.L.Messing), Vol. 12, (1990) 911 und "Effect of Ti on Sinterability of 70 % $Al_2O_3$-30 % Cr Cermets", Ceram.Bull. 57 (1978) 1056) führte nicht zum gewünschten Erfolg. Es muß daher davon ausgegangen werden, daß neben der Benetzung auch die Anwesenheit von Oxidschichten auf den eingebrachten Metallpartikel einen erheblichen Einfluß auf die Sintereigenschaften der Cermets hat ("Effect of Sintering Atmosphere on the Properties of Cermets", Powder Metallurgy International, 23, [4] (1991) 224). Daher sind aufwendige Herstellungstechnologien wie z.B. Heißpressen oder Heißschmieden (UK-Patent 2,070,068A; US-Patent 5,077,246) oder eine Nachbehandlung durch heißisostatisches Pressen erforderlich. Dennoch führt der charakteristische Gefügeaufbau der Cermets, bei dem die keramische Phase hauptsächlich in der metallischen Phase eingebettet ist, die oft jedoch weniger als 20 Vol.-% des Gesamtvolumens einnimmt ("Processing of $Al_2O_3$/Ni-Composites", J.Eur.Ceram. Soc., 10 (1992) 95) in der Regel zu schlechten mechanischen Eigenschaften. Aus diesem Grund konnten lediglich metallgebundene nichtoxidische Cermets, insbesondere Carbide, z.B. TiC-Ni ("The Story of Cermets", Powder Metallurgy International, 21 (1989) 37) für technische Anwendungen durchsetzen.

Bei der Entwicklung neuartiger Metall-Keramik-Verbundwerkstoffe ist es demzufolge das Ziel, ein Gefüge, bestehend aus einer keramischen Matrix, in die eine durchdringende metallische Phase eingebettet ist, herzustellen. Diese Verbundwerkstoffe ermöglichen eine deutliche Verbesserung der mechanischen Eigenschaften ("Effect of Microstructure on Thermal Shock Resistance of Metal-Reinforced Ceramics", J.Am. Ceram.Soc. 77 (1994) 701 und "Metalle verbessern mechanische Eigenschaften von Keramiken", Spektrum der Wissenschaft, Januar (1993) 107), da das in der keramischen Matrix eingebettete Metall wesentlich bessere mechanische Eigenschaften aufweist als im "freien" Zustand ("Metcers- a Strong Variant of Cermets", Cfi/ Ber. DKG 71 (1994) 301).

Verfahren zur Herstellung derartiger Metall-Keramik-Verbundwerkstoffe sind z.B. die gerichtete Schmelzoxidation (DMO) ("Formation of Lanxide TM Ceramic Composite Materials", J.Mater.Res., 1 (1986) 81 und "Directed Oxidation of Molten Metals" in: Encyclopedia of Mat. and Eng. (Ed. R.W.Cahn), Supplementary Vol. 2, Pergamon, Oxford (1990) 1111), Druckgießen ("Application of the Infiltration Technique to the Manufacture of Cermets", Ber.Dt.Keram.Ges., 48 (1971) 262), die Infiltration poröser keramischer Vorformen mit flüssigem Metall ("Method for Processing Metal-Reinforced Ceramic Composites" J.Am.Ceram. Soc., 73 [2] (1990) 388), die gegebenenfalls auch unter Druck erfolgen kann, um auch nichtbenetzende Metalle zu infiltrieren "Microstructure and Properties of Metal Infiltrated RBSN Composites" J.Eur.Ceram.Soc. 9 (1991) 61) sowie die Reaktionsinfiltrierung (Reactive Metal Infiltration) $SiO_2$-haltiger Vorkörper ("$Al_2O_3$/Al Co-Continous Ceramic Composite ($C^4$) Materials produced by Solid/Liquid Displacement Reactions: Processing Kinetics and Microstructures", Ceram.Eng.Sci.Porc. 15 (1994) 104).

Alle diese Verfahren haben neben dem hohen Prozeßaufwand charakteristische Nachteile. So sind beispielsweise die beiden Reaktionformverfahren, die gerichtete Schmelzoxidation und $C^4$ nur für die Herstellung von Verbundwerkstoffen, bestehend aus einer $Al_2O_3$-Matrix und einer Si- oder Mg-haltigen Al-Legierung anwendbar. Zudem sind in beiden Fällen die Reaktionsgeschwindigkeiten sehr langsam (2 cm/Tag) und damit die Prozeßzeiten extrem lang. Durch Druckgießen können aus technischen Gründen (kein geeignetes Druckbehältermaterial) ebenfalls lediglich $Al_2O_3$/Al-Verbunde hergestellt werden. Ähnliche Probleme treten auch bei der Infiltration auf, da die für die Infiltration hochschmelzender Metalle erforderlichen Prozeßtemperaturen (100 bis 200°C oberhalb der Schmelzpunkte des Metalls) aus technischen Gründen kaum realisierbar sind.

Doch auch die pulvermetallurgische Herstellung von Metall-Keramik-Verbundwerkstoffen hat sich in vielen Fällen als problematisch und aufwendig erwiesen. $Al_2O_3$-haltige Metall-Keramik-Verbundwerkstoffe lassen sich beispielsweise durch Thermitreaktionen (SHS: Self-Propagating High-Temperature Synthesis) nach folgendem Reaktionsschema darstellen.

$$Me_xO_y + Al \rightarrow Al_2O_3 + Me$$

$$x, y = 1, 2, ..., n$$

Dabei wird ein Metalloxid durch Al zu dem jeweiligen Metall reduziert, während Al zu $Al_2O_3$ oxidiert ("Combustion Synthesis of Ceramic and Metal-Matrix Composites", J.Mat.Synth.Proc. 1 (1994) 71). Diese Reaktion verläuft in den meisten Fällen sehr exotherm und ist damit nur sehr schwer kontrollierbar. Daher sind SHS-Verbundwerkstoffe zumeist porös und inhomogen. Die schlechten mechanischen Eigenschaften schließen ihren Einsatz als Konstruktionsbauteile aus.

Ein weiterer Ansatz zur Lösung des Problems der pulvermetallurgischen Herstellung metallverstärkter Keramik wird in der DE-P 44 47 130.0 vorgeschlagen. Danach werden aus Metalloxiden und Aluminium gemäß der Reaktion

$$Me_xO_y + Al \rightarrow Me_xAl_y + Al_2O_3$$

x,y=1,2,...n

Verbundwerkstoffe, bestehend aus $Al_2O_3$ und intermetallischen Aluminidverbindungen, hergestellt. Ein gewisser Nachteil ist hier jedoch, daß die Reaktion, ähnlich wie bei den SHS-Werkstoffen, stark exotherm ist und daher eine aufwendige Prozeßkontrolle erfordert. Zudem zeichnen sich Aluminide zumeist zwar durch gute Hochtemperaturstabilität sowie gute Korrosions- und Oxidationsbeständigkeit aus, ein Nachteil besteht jedoch in ihrer extremen Sprödigkeit bei Raumtemperatur ("Intermetallics", G.Sauthoff, VCH Verlag, Weinheim, 199-5, ISBN 3-527-29320-5)). Aus diesem Grund kann bei den aluminidverstärkten Keramiken nicht mit einer deutlichen Erhöhung der Bruchzähigkeit durch die Einlagerung der intermetallischen Phase gerechnet werden.

Aufgabe der Erfindung ist es daher Verbundwerkstoffe bereitzustellen, die eine $Al_2O_3$-Matrix aufweisen, welche mit einem interpenetrierenden Netzwerk einer höher als Al schmelzenden, duktilen Metallphase durchzogen ist, welche die zuvor aufgeführten Nachteile nicht aufweisen.

Gelöst wird diese Aufgabe erfindungsgemäß durch einen Keramik-Metall-Verbundwerkstoff mit einer Matrix aus $Al_2O_3$ und eingelagertem Metall, welches dadurch gekennzeichnet ist, daß die $Al_2O_3$-Matrix des gesinterten Verbundwerkstoffes von einem interpenetrierenden Netzwerk einer höher als Aluminium schmelzenden duktilen Metallphase durchzogen ist, die 15 bis 80 Vol.-% des Gesamtvolumens ausmacht, die $Al_2O_3$-Matrix ein zusammenhängendes Netzwerk bildet, das einen Volumenanteil von 20 bis 85 Vol.-% ausmacht und der Werkstoff 0,1 bis 20 Atom-% Aluminium, bezogen auf die Metallphase, jedoch höchstens 15 Vol.-% Aluminid enthält.

Das erfindungsgemäße Verfahren zur Herstellung dieses Metall-Keramik-Formkörpers ist dadurch gekennzeichnet, daß man einen pulvermetallurgisch geformten Grünkörper sintert, der aus einem feinstteiligen Pulvergemisch aus $Al_2O_3$ und gegebenenfalls weiteren keramischen Substanzen, sowie einem oder mehreren Metallen oder Metallegierungen besteht, denen Aluminium in einem Metallanteil von 0,1 bis 20 Atom-% zugesetzt wird, wobei die Zusammensetzung so gewählt wird, daß höchstens 15 Vol.-% Aluminidphase im fertig gesinterten Körper gebildet werden können. Diese neue Werkstoffklasse gemäß der Erfindung wird als "3A-MC" (<u>A</u>l$_2$<u>O</u>$_3$ <u>A</u>l-<u>A</u>lloyed <u>M</u>etal <u>C</u>omposites) bezeichnet.

Aluminium kann entweder als Pulver zugemischt oder dem Metall zulegiert werden. Beim erfindungsgemäßen Verfahren bildet die $Al_2O_3$-reiche Phase im hergestellten gesinterten Werkstoff ein zusammenhängendes Netzwerk in einem Volumenanteil zwischen 20 und 85 Vol.-%. Die metallische Phase dagegen nimmt 15 bis 80 Vol.-% des Gesamtvolumens ein und enthält Al zum größten Teil in gelöster oder freier Form. Sie enthält vorzugsweise keine Aluminide. Jedoch sind bis 1.5 Vol.-%, bezogen auf den Gesamtkörper, an Aluminiden zulässig.

Die Erfindung geht aus von der überraschenden Feststellung, daß ein Grünkörper, bestehend aus feinstteiligem $Al_2O_3$, Fe und einer geringen Menge Al, die unterhalb der Löslichkeitsgrenze von Al in Fe liegt, bei Temperaturen um 1450°C im Vakuum nahezu völlig dicht (> 98 % TD) gesintert werden kann, ohne daß eine röntgenographisch nachweisbare Aluminidbildung stattfindet.

Voraussetzung für die Entwicklung der Mikrostruktur, die für den Verbundwerkstoff der Erfindung charakteristisch ist, ist das feinstteilige Vorliegen der Bestandteile des Grünkörpers. Das Vermahlen der Bestandteile zu einem derartigen feinstteiligen Pulver erfolgt zweckmäßig in einer Kugelmühle oder einer entsprechenden Mahlvorrichtung. Als Mahlkugeln werden vorzugsweise Stahlkugeln oder Kugeln aus WC-Co, $Al_2O_3$ oder $ZrO_2$ (Y-TZP) eingesetzt. Die spezifische Oberfläche der gemahlenen Pulver beträgt mindestens 1 m$^2$/g. Bevorzugt wird eine Mahlung in einer organischen Flüssigkeit wie Cyclohexan, Aceton etc.. Aber auch eine trockene Mahlung unter Ar, wie beim mechanischen Legieren üblich, ist möglich.

Die Zusammensetzung des Grünkörpers wird so gewählt, daß im fertigen Verbundkörper die Metallphase 15 bis 80 Vol.% des Gesamtvolumens einnimmt. Das der Mischung zugesetzte Al liegt entweder frei oder in der Metallphase gelöst vor oder reagiert mit der Oxidschicht auf der Oberfläche der Metallpartikel gemäß der bekannten Reaktion:

$$Me_xO_y + Al \rightarrow Me + Al_2O_3$$

x, y = 1, 2, ..., n

Als zusätzliche keramische Substanzen werden für das Pulvergemisch vorzugsweise $ZrO_2$, Mullit, $B_4C$, SiC, $TiB_2$ ausgewählt.

Die Metallphase besteht vorzugsweise aus Eisen oder einer Eisenlegierung. Sie kann aber auch aus einem oder mehreren der folgenden Metalle oder deren Legierungen oder Verbindungen: Cr, Co, Hf, Mo, Nb, Ni, Pt, Si, Ti, Ta, Y, W, V, Zr bestehen.

Der Pulvermischung können gegebenenfalls Verstärkungs- oder Funktionselemente zugesetzt werden. Diese liegen beispielsweise in Form von Partikeln, Kugeln, Plättchen, Whiskern, Kurz- oder Langfasern bzw. Fasergewebe oder dgl. vor. Um die guten mechanischen Eigenschaften des Grundkörpers aufrechtzuerhalten, sollten die Verstärkungs- oder Funktionselemente, vorzugsweise auf $Al_2O_3$-, Mullit-, $Si_3N_4$- oder SiC(B,N)-Basis, Durchmesser zwischen 5 und 100 µm aufweisen. Die Sinterung des Grünkörpers erfolgt drucklos bei Temperaturen zwischen 1200 und 1700°C im Vakuum oder in inerter oder reduzierender Atmosphäre. Der gesinterte Formkörper kann gewünschtenfalls heißisostatisch oder in einer Endform superplastisch bei Temperaturen zwischen 1200 und 1600°C und Drücken zwischen 50 und 300 MPa nachverdichtet werden.

Die beigefügte Zeichnung erläutert die Struktur des erfindungsgemäßen Verbundwerkstoffes näher. In der Zeichnung stellen dar:

Bild 1 die Mikrostruktur des Verbundwerkstoffs, der aus einem Grünkörper bestehend aus 69 Vol.% $Al_2O_3$, 23,5 Vol.% Fe und 7,5 Vol.% Al hergestellt wurde. Die hellen Bereiche zeigen die 5 Metallphase bestehend aus Fe, die dunklen Bereiche die keramische Matrixphase aus α-$Al_2O_3$. Die Metallphase nimmt ca. 30 Vol.%, die keramische Matrix ca. 70 Vol.% des Gesamtvolumens ein. Die gesamte Pulvermenge betrug 100 g, die 7 Stunden attritiert wurden unter Verwendung von $ZrO_2$-Kugeln in Aceton.

Bild 2 eine Graphik, die den Schrumpfungsverlauf einer Pulvermischung aus 69 Vol.% $Al_2O_3$, 35,5 Vol.% Fe und 7,5 Vol.% Al zeigt, die in einem Dilatometer aufgenommen wurde.

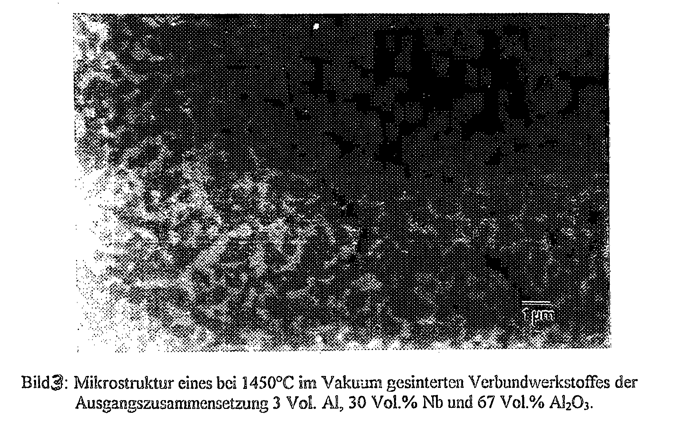

Bild 3 die Mikrostruktur eines 1550°C drucklos gesinterten Verbundwerkstoffes der Ausgangszusammensetzung 3 Vol.% Al, 30 Vol.% Nb und 67 Vol.% $Al_2O_3$.

Durch die Erfindung werden gegenüber dem Stand der Technik eine Reihe von erheblichen Vorteilen erzielt. So werden die verfahrens- und sicherheitstechnischen Probleme, die bei der pulvermetallurgischen Verarbeitung von Pulvermischungen mit hohen Al-Gehalten auftreten, wie Schutzgasmahlung, Sauerstoffaufnahme, spontane Oxidation des feingemahlenen Aluminiums vermieden. Bei den "3A-MC's" sind aufgrund des geringen Aluminiumgehaltes der Pulvermischungen diese Probleme zu vernachlässigen.

Eine vollständige Verdichtung ist drucklos bei Temperaturen von etwa 1400°C, bei heißisostatischem Pressen sogar bereits bei 1300°C ermöglicht. Der erfindungsgemäße Verbundwerkstoff kann daher mit geringem technologischem Aufwand kostengünstig hergestellt werden. Zusätzliche Sinterhilfen sind nicht erforderlich.

Der erfindungsgemäße Verbundwerkstoff stellt eine ideale Matrix für Verstärkungsmaterialien, insbesondere für Plättchen- und Faserverbundwerkstoffe dar. Aufgrund der niedrigen erforderlichen Sintertemperaturen können Faserverbundwerkstoffe problemlos ohne Faserschädigung verdichtet werden.

Der erfindungsgemäße Verbundwerkstoff vereint die positiven typischen keramischen Eigenschaften wie Hochtemperaturstabilität, Korrosions- und Oxidationsbeständigkeit sowie hohe Härte mit einer durch die metallische Einlagerungsphase verbesserten Bruchfestigkeit und Bruchzähigkeit. Aufgrund der zusammenhängenden Metallphase weist der Verbundwerkstoff eine gute Wärmeleitfähigkeit auf, die wiederum zu einer verbesserten Thermoschockfestigkeit führt.

Aufgrund der durchgängigen Metallphase ist der Verbundwerkstoff auch elektrisch leitend, so daß eine funkenerosive Bearbeitung und eine induktive Aufheizung möglich sind. Die Wahl der Metallphase ist gegenüber den $Al_2O_3$-Aluminidverbundwerkstoffen wesentlich erweitert, da sie nicht auf die bei Raumtemperatur unerwünscht spröden Aluminide beschränkt ist. Dies hat zur Folge, daß durch Variation der Ausgangszusammensetzung auch die Funktionseigenschaften, z.B. der elektrische Widerstand, gezielt eingestellt werden können.

Verbundwerkstoffe der erfindungsgemäßen Zusammensetzung lassen sich nach bekannten Verfahren nicht mit vergleichbaren Merkmalen erhalten. So wäre eine Infiltration eines porösen Keramikmatrixkörpers oberhalb der Schmelztemperatur von Refraktärmetallen, wenn überhaupt, nur mit einem nicht vertretbaren technischen Aufwand möglich. Eine pulvermetallurgische Herstellung ohne Zugabe von Aluminium führt zu hochporösen Produkten mit ungenügenden mechanischen Eigenschaften. Dagegen lassen sich bei der Erfindung praktisch alle aus der Metallurgie bekannten Legierungszusätze und Wärmebehandlung zur gezielten Verbesserung der mechanischen Eigenschaften der Metallphase einsetzen. Dies gilt insbesondere, wenn das eingelagerte Material ein Stahl ist.

Sowohl die nahezu unbeschränkte Variationsbreite bei der Auswahl der Metallphase zur Herstellung der erfindungsgemäß erhältlichen "3A-MC's" wie auch ihre problemlose Herstellung mit einfachen technologischen Mitteln zeigen daher, daß die vorliegende Erfindung eine neue Klasse von Verbundwerkstoffen erschließt. Einsatzmöglichkeiten für "3A-MC's" sind z.B. verschleißfeste Komponenten im Maschinen- und Apparatebau sowie Friktionselemente, insbesondere Bremselementen und als bioinerte Implantate.

Die folgenden Beispiele erläutern die Erfindung weiter.

Zu allen Beispielen muß beachtet werden, daß während des Attritormahlens 10 bis 40 Gew.-% des Al durch Oxidation zu amorphem $Al_2O_3$ und Gamma-artigen $Al_2O_3$-Phasen umgewandelt wird. Diese Mahleffekte sind ausführlich in "Effect of Processing Parameters on Phase and Microstructure Evolution in RBAO Ceramics" J.Am.Ceram.Soc. 77(1994) 2509 beschrieben.

Beispiel 1

100 g eines Pulvers aus 6 Vol.-% Al-Pulver (Alcan 105, 20 bis 50 µm Durchmesser, Alcan, Montreal/Kanada), 51 Vol.-% $Al_2O_3$ (MPA 4, Ceralox Condea Chemie, Brunsüttel, 0,3 µm Durchmesser), 43 Vol.-% Fe (BASF, Ludwigshafen, < 10 µm Durchmesser) wurde 7 Stunden in einer Attritormühle mit 3 mm TZP-Mahlkugeln in Aceton gemahlen. Die mittlere Pulverteilchengröße wurde dadurch auf 1 µm reduziert. Danach wurde die Mischung getrocknet und anschließend isostatisch zu Platten mit den Abmessungen 40 x 40 x 8 mm$^3$ unter einem Druck von 300 bis 900 MPa gepreßt. Anschließend wurden die Proben in Vakuum mit 30 K/min auf 1500°C aufgeheizt und 1 Stunde auf dieser Temperatur gehalten.

Alle Proben wiesen danach eine Dichte von über 95 % TD (theoretische Dichte) auf, wobei zum Teil noch feine Poren mit Durchmessern < 1 µm vorhanden waren. Die Körper bestanden aus Eisen mit feinen (Durchmesser < 5 µm) Bereichen, die im wesentlichen zusammenhängend in eine keramische Matrix aus ca. 50 Vol.-% $Al_2O_3$ eingelagert waren. Fe-Aluminide konnten röntgenographisch nicht festgestellt werden. Die Schrumpfung (lineare Differenz zwischen der Abmessung des Grün- und Sinterkörpers) betrug bei einem isostatischen Preßdruck von 900 MPa 12 % und bei 300 MPa 16 %. Die mittlere 4-Punkt-Biegefestigkeit von aus den Platten herausgearbeiteten Stäbchen mit den Abmessungen 30 x 4 x 4 mm$^3$ betrug 690 MPa und die Rißlängebruchzähigkeit (ICL) 7,5 MPa m$^{1/2}$.

Beispiel 2

Wie im Beispiel 1 wurde eine Mischung aus 4 Vol.-% Al, 29 Vol.-% Fe (Aldrich, Steinheim, < 10 µm Durchmesser), 67 Vol.-% $Al_2O_3$ 7 Stunden lang attritiert, getrocknet und bei 900 MPa isogepreßt. Anschließend wurden die Proben in Vakuum mit 30 K/min auf 1525°C aufgeheizt und 1 Stunde auf dieser Temperatur gehalten. Die Schrumpfung betrug danach 15 % bei einer Enddichte von über 95 % TD. Der Sinterkörper bestand aus ca. 30 Vol.-% Fe und 70 Vol.-% $Al_2O_3$ mit Spuren von feinzerteiltem $Fe_3Al$.

Beispiel 3

Wie im Beispiel 1 beschrieben, nur in Isopropanol statt Aceton, wurde eine Mischung aus 3 Vol.-% Al, 30 Vol.-% Nb (Starck, Goslar, < 10 µm Durchmesser), 67 Vol.-% $Al_2O_3$ attritiert, getrocknet und bei 300 MPa isostatisch gepreßt. Anschließend wurden die Proben in Vakuum mit 15 K/min auf 1550°C aufgeheizt und 1 Stunde auf dieser Temperatur gehalten. Die Schrumpfung betrug danach 16,5 % bei einer Enddichte von über 96 % TD. Der Sinterkörper bestand aus ca. 30 Vol.-% Nb mit Spuren aus $AlNb_3$ und ca. 70 Vol.-% $Al_2O_3$. Die ICL-Bruchzähigkeit betrug 7,1 MPa m$^{1/2}$.

Beispiel 4

Wie im Beispiel 1 beschrieben, wurde eine Mischung aus 5 Vol.-% Al, 60 Vol.-% $Al_2O_3$ und 35 Vol.-% Nb attritiert, getrocknet und mit einem isostatischen Preßdruck von 400 MPa verdichtet. Anschließend wurden die Proben in Formiergas mit 25 K/min auf 1500°C aufgeheizt und 2 h auf dieser Temperatur gehalten. Der Sinterkörper hatte eine Dichte von > 95 % TD und bestand danach aus ca. 35 Vol.-% Nb und 65 Vol.-% $Al_2O_3$ mit Spuren von $Nb_3Al$. Nach einer 10-minütigen heißisostatischen Nachverdichtung bei einem Ar-Druck von 180 MPa und einer Temperatur von 1450°C waren die Proben nahezu völlig dicht; die ICL-Bruchzähigkeit betrug 8,2 MPa m$^{1/2}$.

Beispiel 5

Wie im Beispiel 1 beschrieben, wurde eine Mischung aus 3 Vol.-% Al, 30 Vol.-% Ti, (Aldrich, Steinheim < 100 µm Durchmesser), 67 Vol.-% $Al_2O_3$ attritiert, getrocknet und anschließend bei 300 MPa isogepreßt. Die entsprechenden Körper hätten nach einer Sinterung in Formiergas bei 1550°C, 2 h Dichte von ca. 95 % TD bei einer Schrumpfung von 14,2 %. Der so erhaltene Sinterkörper bestand aus Ti und $Al_2O_3$. Spuren von $Ti_3Al$ konnten ebenfalls nachgewiesen werden.

Beispiel 6

200 g einer Mischung aus 4 Vol.-% Al, 48 Vol.-% $Al_2O_3$ und 48 Vol.-% Ti wurde in Cyclohexan mit 1,7 Gew.-% Stearinsäure 3 h attritiert und sprühgetrocknet. Nach isostatischer Pressung bei 300 MPa und 1-stündige Sinterung in Vakuum bei 1500°C wurden Körper mit einer Dichte von ca. 94 % TD bei einer Schrumpfung von 15,5 % erhalten. Der Sinterkörper bestand aus ca. 50 Vol.-% Ti und ca. 50 Vol.-% $Al_2O_3$.

Beispiel 7

Wie im Beispiel 1 beschrieben, wurde eine Mischung aus 7 Vol.-% Al, 42 Vol.-% Ni und 51 Vol.-% $Al_2O_3$ attritiert, bei 300 MPa isogepreßt und in Vakuum bei 1425°C gesintert. Bei einer Schrumpfung von 14,3 % und einer Sinterdichte von > 95 % TD bestand der Körper aus ca. 50 Vol.-% $Al_2O_3$-Matrix mit einer feinverteilten zusammenhängenden Ni. Nach einer 20-minütigen HIP-Nachverdichtung bei 200 MPa Ar-Druck betrug die KL-Bruchzähigkeit 8,3 MPa m$^{1/2}$.

Beispiel 8

Wie im Beispiel 2 beschrieben, wurde eine Mischung aus 13 Vol.-% Al, 15 Vol.-% Mo (Heraeus, Karlsruhe, 2 bis 4 μm Durchmesser) und 52 Vol.-% $Al_2O_3$ attritiert, isogepreßt und gesintert. Die Proben erreichten ca. 96 % TD bei einer Schrumpfung von 14,3 %. Die Sinterkörper bestanden aus ca. 15 Vol.-% Mo sowie ca. 85 Vol.-% $Al_2O_3$. Röntgenographisch ließen sich noch Spuren von $Mo_3Al$ und anderen Phasen feststellen, die noch nicht identifiziert werden konnten.

Beispiel 9

Wie im Beispiel 2 beschrieben, wurde eine Mischung aus 3 Vol.-% Al, 29 Vol.-% Mo und 68 Vol.-% $Al_2O_3$ attritiert, isogepreßt und bei 1600°C 2 h in Formiergas gesintert. Die Proben waren nahezu völlig dicht und bestanden aus ca. 30 Vol.-% Mo mit einem geringen Anteil $Mo_3Al$ sowie ca. 70 Vol.-% $Al_2O_3$.

Beispiel 10

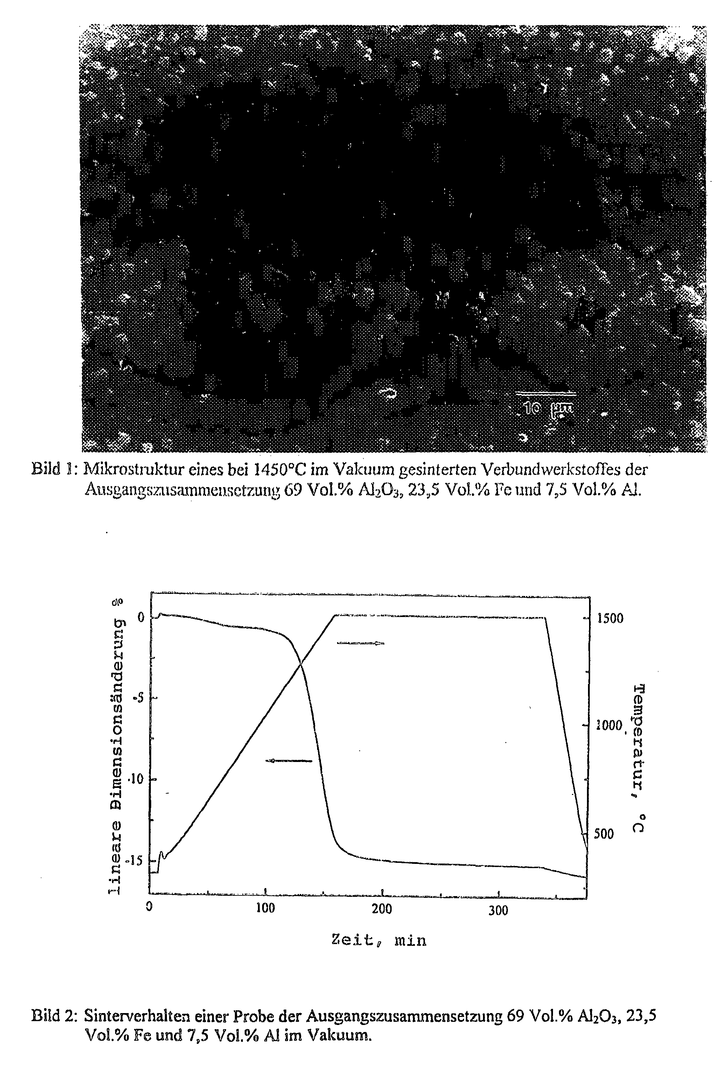

100 g einer Pulvermischung aus 69 Vol.% $Al_2O_3$, 23,5 Vol.% Fe und 7,5 Vol.% Al wurden 7 Stunden im Attritor mit $ZrO_2$-Kugeln unter Zusatz von Aceton feinstpulvrig gemahlen und dann analog wie Beispiel 1 beschrieben ein Grünkörper hergestellt. Bild 1 zeigt die Mikrostruktur des erhaltenen Verbundwerkstoffs mit den dunklen Bereichen aus $\alpha$-$Al_2$ und den hellen Bereichen der Metallphase. Letztere nimmt ca. 30 Vol.%, die $Al_2O_3$-Matrix ca. 70 Vol.% ein.

Vergleichsbeispiel 11

Wie in Beispiel 1 beschrieben, wurde ein Grünkörper hergestellt aus 71 Vol.% $Al_2O_3$ und 28,5 Vol.% Fe ohne Zusatz von Al. Nach Sinterung bei 1450°C wies der erhaltene Verbundwerkstoff eine Restporosität von 18 Vol.% auf.

Beispiel 12

Wie in Beispiel 1 beschrieben, wurde eine Pulvermischung aus 69 Vol.% $Al_2O_3$, 23,5 Vol.% Fe und 7,5 Vol.% Al hergestellt, zu einem Grünkörper gepreßt und gesintert. Bei einer Temperatur oberhalb von 1300°C beginnt die Sinterung einzusetzen und ist bei einer Temperatur von 1550°C abgeschlossen. Den Schrumpfungsverlauf dieser Probe zeigt Bild 2. Trotz Anwesenheit der üblicherweise sinterhemmenden Metallphase erfolgt eine vollständige Verdichtung.

**Patentansprüche**

1. Keramik-Metall-Verbundwerkstoff mit einer Matrix aus $Al_2O_3$ und eingelagertem Metall,
 **dadurch gekennzeichnet,**
 daß die $Al_2O_3$-Matrix des gesinterten Verbundwerkstoffes von einem interpenetrierenden Netzwerk einer höher als Aluminium schmelzenden duktilen Metallphase durchzogen ist, die 15 bis 80 Vol.-% des Gesamtvolumens ausmacht, die $Al_2O_3$-Matrix ein zusammenhängendes Netzwerk bildet, das einen Volumenanteil von 20 bis 85 Vol.-% ausmacht und der Werkstoff 0,1 bis 20 Atom-% Aluminium, bezogen auf die Metallphase, jedoch höchstens 15 Vol.-% Aluminid enthält.

2. Verbundwerkstoff nach Anspruch 1,
 **dadurch gekennzeichnet,**
 daß die Metallphase ausgewählt ist aus Fe, Cr, Co, Hf, Mo, Nb, Ni, Pt, Ti, Ta, Y, W, V, Zr und Si und Mischungen, Legierungen oder Verbindungen davon.

3. Verbundwerkstoff nach Anspruch 2,
 **dadurch gekennzeichnet,**
 daß die Metallphase überwiegend aus Fe besteht.

4. Verbundwerkstoff nach einem der Ansprüche 1 bis 3,
 **dadurch gekennzeichnet**,
 daß er Verstärkungs- oder Funktionselemente mit einem Durchmesser zwischen 5 und 100 μm enthält.

5. Verbundwerkstoff nach einem der vorhergehenden Ansprüche,
 **dadurch gekennzeichnet,**
 daß bis 25 Vol.-% des $Al_2O_3$-Anteils durch andere keramische Substanzen ersetzt ist.

6. Verbundwerkstoff nach Anspruch 5,
 **dadurch gekennzeichnet**,
 daß die anderen keramischen Substanzen $ZrO_2$, Mullit, $B_4C$, SiC oder/und $TiB_2$ sind.

7. Verfahren zur Herstellung des Keramik-Metall-Verbundwerkstoffs gemäß einem der Ansprüche 1 bis 6,
 **dadurch gekennzeichnet**,
 daß man einen pulvermetallurgisch geformten Grünkörper sintert, der aus einem feinstteiligen Pulvergemisch aus $Al_2O_3$ und gegebenenfalls den weiteren keramischen Substanzen, sowie einem oder mehreren, von Al verschiedenen Metall(en) oder Metallegierung(en) besteht dem bzw. denen Aluminium in einer, auf den Metallanteil bezogenen, Menge zwischen 0,1 und 20 Atom-% zugesetzt ist, wobei die Zusammensetzung so gewählt wird, daß höchstens 15 Vol.-% Aluminidphase im fertig gesinterten Körper gebildet werden können.

8. Verfahren nach Anspruch 7,
   **dadurch gekennzeichnet,**
   daß man bei Temperaturen zwischen 1200 und 1700°C im Vakuum, in inerter oder reduzierender Atmosphäre sintert.

9. Verfahren nach Anspruch 7 oder 8,
   **dadurch gekennzeichnet,**
   daß man das Aluminium entweder in Pulverform zumischt oder dem Metall zulegiert.

10. Verfahren nach einem der Ansprüche 7 bis 9,
    **dadurch gekennzeichnet,**
    daß man zur Herstellung des Grünkörpers die Pulvermischung der Ausgangskomponenten solange in einer Kugelmühle mahlt, bis die spezifische Oberfläche mindestens 1 $m^2$/g beträgt.

11. Verfahren nach einem der Ansprüche 7 bis 10,
    **dadurch gekennzeichnet,**
    daß man der Pulvermischung vor der Formung zum Grünkörper
    Verstärkungs- oder Funktionselemente in Form von Partikeln, Kugeln, Plättchen, Whisker, Kurzfasern, Langfasern oder Fasergewebe zusetzt.

12. Verfahren nach Anspruch 11,
    **dadurch gekennzeichnet**,
    daß man Fasern auf $Al_2O_3$-, Mullit-, $Si_3N_4$- oder SiC (B,N)- Basis zusetzt, die einen Durchmesser zwischen 5 und 100 µm aufweisen.

13. Verfahren nach einem der Ansprüche 7 bis 12,
    **dadurch gekennzeichnet**,
    daß der gesinterte Formkörper heißisostatisch oder in einer Endform superplastisch bei Temperaturen zwischen 1200 und 1600°C und Drücken zwischen 50 und 300 MPa nachverdichtet wird.

14. Verwendung eines Keramik-Metall-Formkörpers nach einem der Ansprüche 1 bis 6 als verschleißfeste Komponente im Maschinen- und Apparatebau oder als Schneidwerkzeug.

15. Verwendung eines Metall-Keramik-Formkörpers nach einem der Ansprüche 1 bis 6 als Friktionselement, insbesondere als Bremselement.

16. Verwendung eines Metall-Keramik-Formkörpers nach einem der Ansprüche 1 bis 6 mit einem wesentlichen Titananteil in der Metallphase als bioinertes Implantat.

## Claims

1. A ceramic metal composite material with a matrix of $Al_2O_3$ and an embedded metal, characterised in that the $Al_2O_3$ matrix of the sintered composite material is permeated by an interpenetrating network of a ductile metal phase having a melting point higher than that of aluminium, which comprises 15 to 80 % of the total volume, the $Al_2O_3$ matrix forming a coherent network, which comprises a proportion by volume of 20-85 % and the material contains 0.1 to 20 atom% aluminium with respect to the metal phase, however, not more than 15 vol% aluminide.

2. A composite material according to Claim 1, characterised in that the metal phase is selected from Fe, Cr, Co, Hf, Mo, Nb, Ni, Pt, Ti, Ta, Y, W, V, Zr and Si and mixtures, alloys or compounds thereof.

3. A composite material according to Claim 2, characterised in that the metal phase consists predominantly of Fe.

4. A composite material according to any one of Claims 1 to 3, characterised in that it contains reinforcing or functional elements with a diameter of between 5 and 100 µm.

5. A composite material according to any one of the preceding claims, characterised in that up to 25% of the $Al_2O_3$ content is replaced by other ceramic substances.

6. A composite material according to Claim 5, characterised in that the other ceramic substances are $ZrO_2$ mullite, $B_4C$, SiC and/or $TiB_2$.

7. A method for preparing the ceramic metal composite material according to any one of claims 1 to 6, characterised in that a powder-metallurgically formed green body is sintered, which comprises a finely divided powder mixture of $Al_2O_3$ and optionally the further ceramic substances as well as one or more metals or metal alloys different from Al, to which are added aluminium in a quantity of between 0.1 and 20 atom% relative to the metal fraction, wherein the composition is selected so that no more than 15 vol% aluminide phase can be formed in the final sintered body.

8. A method according to Claim 7, characterised in that sintering is carried out at temperatures of between 1200 and 1700°C in a vacuum, in an inert or reducing atmosphere.

9. A method according to Claim 7 or 8, characterised in that aluminium is added as powder or is alloyed to the metal.

10. A method according to any one of Claims 7 to 9, characterised in that, for the preparation of the green body, the mixture of the starting powder components is ground in a ball mill until the specific surface reaches at least 1 m$^2$/g.

11. A method according to any one of Claims 7 to 10, characterised in that, before forming the green body, reinforcing or functional elements in the form of particles, spheres, platelets, whiskers, short fibres, long fibres or fibre fabric are added to the powder mixture.

12. A method according to Claim 11, characterised in that $Al_2O_3$ mullite, $Si_3N_4$ or SiC (B,H) based fibres are added, which are of a diameter of between 5 and 100 µm.

13. A method according to any one of Claims 7 to 12, characterised in that the sintered formed body is post-densified either hot isostatically or superplastically in a final shape at temperatures of between 1200 and 1600°C and at pressures of between 50 and 300 MPa.

14. Use of a ceramic metal formed body according to any one of Claims 1 to 6 as a wear-resistant component in machinery and apparatus or as a cutting tool.

15. Use of a metal ceramic formed body according to any one of Claims 1 to 6 as a frictional element, especially as a brake element.

16. Use of a metal ceramic formed body according to any one of Claims 1 to 6 with a large Ti content in the metal phase as a bio-inert implant.

**Revendications**

1. Matériau composite en métal et céramique ayant une matrice en $Al_2O_3$ et un métal intercalé, caractérisé en ce que, la matrice $Al_2O_3$ du matériau composite fritté est traversée par un réseau interpénétrant d'une phase métallique ductile à point de fusion plus élevé que l'aluminium, qui constitue 15 à 80 % en volume du volume total, la matrice $Al_2O_3$ forme un réseau cohérent, qui constitue une proportion volumique de 20 à 85 % en volume et le matériau contient 0,1 à 20 % atomiques d'aluminium, rapportés à la phase métallique, cependant au maximum 15% en volume d'aluminide.

2. Matériau composite selon la revendication 1, caractérisé en ce que, la phase métallique est choisie à partir de Fe, Cr, Co, Hf, Mo, Nb, Ni, Pt, Ti, Ta, Y, W, V, Zr et Si et de leurs mélanges, alliages et composés.

3. Matériau composite selon la revendication 2, caractérisé en ce que, la phase métallique consiste principalement en Fe.

4. Matériau composite selon les revendications 1 à 3, caractérisé en ce qu'il contient des éléments de renforcement ou fonctionnels ayant un diamètre entre 5 et 100 µm.

5. Matériau composite selon l'une des revendications précédentes, caractérisé en ce que, jusqu'à 25 % en volume de la partie $Al_2O_3$ est remplacée par d'autres substances céramiques.

6. Matériau composite selon la revendication 5, caractérisé en ce que, les autres substances céramiques sont $ZrO_2$, la mullite, $B_4C$, SiC ou/et $TiB_2$.

7. Procédé pour la préparation du matériau composite en métal et céramique selon l'une des revendications 1 à 6, caractérisé en ce que, l'on fritte un corps de base formé par la métallurgie des poudres, qui consiste en un mélange de poudre finement divisée de $Al_2O_3$ et éventuellement les autres substances céramiques, ainsi qu'un ou plusieurs alliages métalliques ou métaux différents de Al, au(x)quel(s) on ajoute de l'aluminium dans une quantité rapportée à la proportion métallique entre 0,1 et 20 % atomiques, la composition étant choisie de telle sorte qu'au maximum 15 % en volume de phase aluminide peuvent être formés dans le corps fritté fini.

8. Procédé selon la revendication 7, caractérisé en ce que, l'on fritte à des températures entre 1200 et 1700 °C sous vide, dans une atmosphère inerte ou réductrice.

9. Procédé selon la revendication 7 ou 8, caractérisé en ce que, l'on ajoute et mélange l'aluminium soit sous la forme pulvérulente soit on l'ajoute en alliage au métal.

10. Procédé selon l'une des revendications 7 à 9,

caractérisé en ce que,
pour la préparation du corps de base on broie le mélange pulvérulent des composants de départ dans un broyeur à boulets jusqu'à ce que la surface spécifique soit au moins 1 m$^2$/g.

11. Procédé selon l'une des revendications 7 à 10, caractérisé en ce que,
avant le formage du corps de base on ajoute au mélange pulvérulent des éléments de renforcement ou des éléments fonctionnels sous la forme de particules, billes, plaquettes, barbes, fibres courtes, fibres longues ou tissus de fibres.

12. Procédé selon la revendication 11, caractérisé en ce que,
l'on ajoute des fibres sur une base AL$_2$O, mullite, Si$_3$N$_4$ ou SiC (B,N), fibres qui présentent un diamètre entre 5 et 100μm.

13. Procédé selon l'une des revendications 7 à 12, caractérisé en ce que,
le corps de moulage fritté est recomprimé isostatiquement à température élevée ou dans une forme finale superplastiquement à des températures entre 1200 et 1600 °C et à des pressions entre 50 et 300 Mpa.

14. Utilisation d'un corps de moulage en métal et céramique selon l'une des revendications 1 à 6 en tant que composant résistant à l'usure dans la construction des machines et appareils ou d'outils de coupe.

15. Utilisation d'un corps de moulage en métal et céramique selon l'une des revendications 1 à 6 en tant qu'élément de friction, en particulier comme élément de frein.

16. Utilisation d'un corps de moulage en métal et céramique selon l'une des revendications 1 à 6 avec une portion sensible de titane dans la phase métallique en tant qu'implant biologiquement inerte.

Bild 1: Mikrostruktur eines bei 1450°C im Vakuum gesinterten Verbundwerkstoffes der Ausgangszusammensetzung 69 Vol.% $Al_2O_3$, 23,5 Vol.% Fe und 7,5 Vol.% Al.

Bild 2: Sinterverhalten einer Probe der Ausgangszusammensetzung 69 Vol.% $Al_2O_3$, 23,5 Vol.% Fe und 7,5 Vol.% Al im Vakuum.

Bild 3: Mikrostruktur eines bei 1450°C im Vakuum gesinterten Verbundwerkstoffes der Ausgangszusammensetzung 3 Vol. Al, 30 Vol.% Nb und 67 Vol.% Al$_2$O$_3$.